# EUROPEAN PATENT APPLICATION

(11) **EP 4 016 909 A1**
(43) Date of publication of application: **22.06.2022**
(21) Application number: 20855801.5
(22) Date of filing: 12.08.2020
(51) Int. Cl.: H04L 5/00, H04W 72/04

(54) **METHOD FOR INDICATING ENERGY SAVING INFORMATION, BASE STATION AND USER TERMINAL**

(30) Priority: 16.08.2019 CN 201910760919
(71) Applicant: Datang Mobile Communications Equipment Co., Ltd., Beijing 100085 (CN)
(72) Inventor: YANG, Meiying, Beijing 100085 (CN); WANG, Jiaqing, Beijing 100085 (CN); ZHAO, Zheng, Beijing 100085 (CN); LUO, Chen, Beijing 100085 (CN)
(74) Representative: Nony
(86) International application number: PCT/CN2020/108701
(87) International publication number: WO 2021/031958

(57) **Abstract**

A method for indicating energy saving information, a base station and a user terminal. In the prior art, there is a technical problem of a poor energy saving effect when using the PDCCH as an energy saving channel to indicate energy saving information of a UE. The method comprises: carrying first energy saving information in target downlink control information (DCI) of a first time unit, the first energy saving information being used for indicating at least one piece of cross-timeslot scheduling information comprised in a first time window, the first time window comprising at least one time unit using the first time unit or a subsequent time unit as the start point, and the cross-timeslot scheduling information comprising at least among first information and second information, the first information being used for indicating and scheduling the DCI as a cross-timeslot scheduling or a present timeslot scheduling, and the second information being used for indicating the minimum value of a cross timeslot scheduling parameter or the minimum value of a cross-timeslot scheduling parameter in a TDRA list; and transmitting the target DCI to a user terminal.

## Description

### Cross-reference to related applications

The present disclosure claims priority to the Chinese Patent Application No. 201910760919.3, filed to China Patent Office on August 16, 2019, and entitled "METHOD FOR INDICATING ENERGY SAVING INFORMATION, BASE STATION AND USER EQUIPMENT", the entire content of which is incorporated herein by reference.

### Field

The present disclosure relates to the technical field of communication, in particular to a method for indicating energy saving information, a base station and user equipment.

### Background

In a new radio (NR) system of the 5th Generation (5G) mobile network, in order to support larger bandwidth, higher throughput, more complex services, and more complex processing technologies matched with the services, energy-saving design of user equipment (UE) becomes very necessary. Energy-saving design can save power consumption of the user equipment, thereby improving the usage experience of a user, which is very important for the industrialization of 5G. At present, in an energy-saving subject of the UE, people have proposed a method of using a physical downlink control channel (PDCCH) as an energy saving channel to indicate energy saving information of the UE. By using the energy saving information of the UE, the UE can obtain a minimum value of cross-slot scheduling before decoding and scheduling the PDCCH, so that the UE can turn off some transmission devices and reduce the processing speed of main components, thereby achieving an energy saving effect.

A current standard defines that downlink control information (DCI) bears the energy saving information. At present, one piece of target DCI carrying the energy saving information is only configured to indicate one piece of cross-slot scheduling information, which will cause an increase in DCI overhead and power consumption of blind detection of the UE. It can be seen that although the energy saving effect can be achieved at present, the energy saving effect is not ideal.

### Summary

Embodiments of the present disclosure provide a method for indicating energy saving information, a base station and user equipment, configured to solve the technical problem that an energy saving effect is not ideal when a PDCCH is used as an energy saving channel to indicate the energy saving information of the UE.

In a first aspect, in order to solve the above technical problem, an embodiment of the present disclosure provides a method for indicating energy saving information, applied to a base station. The technical solution of the method is as follows: carrying first energy saving information in target DCI of a first time unit, where the first energy saving information is configured to indicate at least one piece of cross-slot scheduling information contained in a first time window, the first time window includes at least one time unit with the first time unit as a start point or with a time unit following the first time unit as a start point, the cross-slot scheduling information includes at least one of first information or second information, the first information is configured to indicate scheduling DCI as cross-slot scheduling or current slot scheduling, and the second information is configured to indicate a minimum value of a cross-slot scheduling parameter or a minimum value of a cross-slot scheduling parameter in a time domain resource allocation (TDRA) list; and transmitting the target DCI to user equipment.

In the embodiment of the present disclosure, the base station carries the first energy saving information in the target DCI of the first time unit. The first energy saving information is configured to indicate the at least one piece of cross-slot scheduling information contained in the at least one time unit with the first time unit as the start point or with the time unit following the first time unit as the start point. The target UCI is transmitted to the user equipment, so that one piece of target DCI carrying the energy saving information can indicate a plurality of pieces of cross-slot scheduling information. Therefore, the technical problems that failure of indication or fuzzy indication exists when the one piece of target DCI carrying the energy saving information indicates the plurality of pieces of cross-slot scheduling information, power consumption of the UE is increased due to loss of the target DCI bearing the energy saving information during transmission, and more target DCI bearing the energy saving information is needed so overhead of the target DCI and power consumption of blind detection of the UE are increased, are solved; power consumption of the UE is reduced; and an energy saving effect is improved.

In combination with the first aspect, in a first possible implementation of the first aspect, the minimum value of the cross-slot scheduling parameter includes at least one of the following: a minimum value of a time interval between physical downlink shared channel (PDSCH) transmission and PDCCH reception; a minimum value of a time interval between PDCCH transmission and PDSCH reception; a minimum value of a time interval between PDCCH transmission and PDSCH transmission; a minimum value of a time interval between PDCCH reception and PDSCH reception; a minimum value of a time interval between physical uplink shared channel (PUSCH) transmission and PDCCH reception; a minimum value of a time interval between PDCCH transmission and PUSCH reception; a minimum value of a time interval between PDCCH transmission and PUSCH transmission; a minimum value of a time interval between PDCCH reception and PUSCH reception; a minimum value of a time interval between PDCCH transmission and non-periodic channel state information-reference signal (CSI-RS) reception; a minimum value of a time interval between non-periodic CSI-RS transmission and PDCCH reception; a minimum value of a time interval between non-periodic CSI-RS transmission and PDCCH transmission; a minimum value of a time interval between non-periodic CSI-RS reception and PDCCH reception; a minimum value of a time interval between PDCCH transmission and sounding reference signal (SRS) reception; a minimum value of a time interval between SRS transmission and PDCCH reception; a minimum value of a time interval between SRS transmission and PDCCH transmission; a minimum value of a time interval between SRS reception and PDCCH reception; a minimum value of a time interval between PDCCH transmission and CSI-RS reception associated with an SRS request; a minimum value of a time interval between CSI-RS transmission associated with the SRS request and PDCCH reception; a minimum value of a time interval between CSI-RS transmission associated with the SRS request and PDCCH transmission; or a minimum value of a time interval between CSI-RS reception associated with the SRS request and PDCCH reception.

In combination with the first aspect, in a second possible implementation of the first aspect, the target DCI includes at least one of downlink (DL) scheduling DCI, uplink (UL) scheduling DCI, group-common DCI, or DCI configured to bear the energy saving information.

In combination with the second possible implementation of the first aspect, in a third possible implementation of the first aspect, the method further includes: determining, if the first energy saving information is borne on the DL scheduling DCI and/or the UL scheduling DCI, the number of the target DCI to be X, where X is smaller than or equal to the number of the DL scheduling DCI or the UL scheduling DCI contained in one time unit.

In combination with the first aspect, in a fourth possible implementation of the first aspect, the method further includes: carrying second energy saving information in target DCI of a second time unit; where the second energy saving information is configured to indicate at least one piece of cross-slot scheduling information contained in a second time window, the second time window includes at least one time unit with the second time unit as a start point or with a time unit following the second time unit as a start point, and a relation between the second time window and the first time window including at least one of partial overlap, non-overlap, or complete overlap; and transmitting the target DCI of the second time unit to the user equipment.

In combination with the first possible implementation of the first aspect, in a fifth possible implementation of the first aspect, the method further includes: determining, if the scheduling DCI for data transfer of an activated bandwidth part (BWP) of a first carrier is configured to be cross-slot scheduling, the cross-slot scheduling parameter to be a maximum value between a first time interval and a first parameter. The first carrier is a carrier set including at least one carrier, the first time interval is configured to represent a time interval by which the activated BWP of the first carrier is switched from a first BWP to a second BWP, and the first parameter is configured to represent a cross-slot scheduling parameter configured for the second BWP.

In combination with the fifth possible implementation of the first aspect, in a sixth possible implementation of the first aspect, the method further includes: transmitting, after data transfer of the activated BWP of the first carrier is completed, a switching signaling on a second carrier. The second carrier is a carrier set including at least one carrier for data scheduling, and the switching signaling is configured to indicate switch of the activated BWP of the first carrier.

In a second aspect, an embodiment of the present disclosure provides a method for indicating energy saving information, applied to user equipment, and including: receiving target DCI carrying first energy saving information transmitted by a base station in a first time unit, where the first energy saving information is configured to indicate at least one piece of cross-slot scheduling information contained in a first time window, the first time window includes at least one time unit with the first time unit as a start point or with a time unit following the first time unit as a start point, the cross-slot scheduling information includes at least one of first information or second information, the first information is configured to indicate scheduling DCI as cross-slot scheduling or current slot scheduling, and the second information is configured to indicate a minimum value of a cross-slot scheduling parameter or a minimum value of a cross-slot scheduling parameter in a TDRA list; and determining the at least one piece of cross-slot scheduling information contained in the first time window according to the target DCI.

In combination with the second aspect, in a first possible implementation of the second aspect, the determining the at least one piece of cross-slot scheduling information contained in the first time window according to the target DCI includes: bearing the at least one piece of cross-slot scheduling information on the scheduling DCI; and returning, by the user equipment, to current slot scheduling if the target DCI is DL scheduling DCI and indicates cross-slot scheduling information of UL scheduling DCI, or the target DCI is UL scheduling DCI and indicates cross-slot scheduling information of DL scheduling DCI.

In the embodiment of the present disclosure, if it is determined that the target DCI is the DL scheduling DCI and indicates the cross-slot scheduling information of the UL scheduling DCI, or that the target DCI is the UL scheduling DCI and indicates the cross-slot scheduling information of the DL scheduling DCI, the user equipment returns to the current slot scheduling, so that the technical problem that failure of indication exists when the target DCI is the DL scheduling DCI while the cross-slot scheduling information needing to be indicated is borne on the UL scheduling UCI, or the target DCI is the UL scheduling DCI while the cross-slot scheduling information needing to be indicated is borne on the DL scheduling UCI, is solved.

In combination with the second aspect, in a second possible implementation of the second aspect, the method further includes: receiving target DCI carrying second energy saving information transmitted by the base station in a second time unit, where the second energy saving information is configured to indicate at least one piece of cross-slot scheduling information contained in a second time window, and the second time window includes at least one time unit with the second time unit as a start point or with a time unit following the second time unit as a start point; and determining, by the user equipment, the cross-slot scheduling information according to the target DCI received recently if the second time window partially or completely overlaps with the first time window.

In combination with the second aspect, in a third possible implementation of the second aspect, the method further includes: receiving, by the user equipment, the cross-slot scheduling parameter if the scheduling DCI for data transfer of an activated bandwidth part (BWP) of a first carrier is configured to be cross-slot scheduling, where the cross-slot scheduling parameter is a maximum value between a first time interval and a first parameter. The first time interval is configured to represent a time interval by which the activated BWP of the first carrier is switched from a first BWP to a second BWP, and the first parameter is configured to represent a cross-slot scheduling parameter configured for the second BWP of the first carrier.

In combination with the third possible implementation of the second aspect, in a fourth possible implementation of the second aspect, the method further includes: receiving, after data transfer of the activated BWP of the first carrier is completed, a switching signaling on a second carrier, where the second carrier is a carrier set including at least one carrier for data scheduling, and the switching signaling is configured to indicate switch of the activated BWP of the first carrier; and switching the activated BWP of the first carrier from the first BWP to the second BWP according to the switching signaling.

In a third aspect, an embodiment of the present disclosure provides a base station, including: a processing module, configured to carry first energy saving information in target DCI of a first time unit, where the first energy saving information is configured to indicate at least one piece of cross-slot scheduling information contained in a first time window, the first time window includes at least one time unit with the first time unit as a start point or with a time unit following the first time unit as a start point, the cross-slot scheduling information includes at least one of first information or second information, the first information is configured to indicate scheduling DCI as cross-slot scheduling or current slot scheduling, and the second information is configured to indicate a minimum value of a cross-slot scheduling parameter or a minimum value of a cross-slot scheduling parameter in a time domain resource allocation (TDRA) list; and a transmitting module, configured to transmit the target DCI to user equipment.

In combination with the third aspect, in a first possible implementation of the third aspect, the processing module is further configured to: determine, if the first energy saving information is borne on DL scheduling DCI and/or UL scheduling DCI, the number of the target DCI to be X, where X is smaller than or equal to the number of the DL scheduling DCI or the UL scheduling DCI in one time unit.

In combination with the third aspect, in a second possible implementation of the third aspect, the transmitting module is further configured to: carry second energy saving information in target DCI of a second time unit, where the second energy saving information is configured to indicate at least one piece of cross-slot scheduling information contained in a second time window, the second time window includes at least one time unit with the second time unit as a start point or with a time unit following the second time unit as a start point, and a relation between the second time window and the first time window includes at least one of partial overlap, non-overlap, or complete overlap; and transmit the target DCI of the second time unit to the user equipment.

In combination with the third aspect, in a third possible implementation of the third aspect, the base station further includes a determining module, configured to: determine, if the scheduling DCI for data transfer of a BWP of a first carrier is configured to be cross-slot scheduling, the cross-slot scheduling parameter to be a maximum value between a first time interval and a first parameter. The first carrier is a carrier set includes at least one carrier, the first time interval is configured to represent a time interval by which the activated BWP of the first carrier is switched from a first BWP to a second BWP, and the first parameter is configured to represent a cross-slot scheduling parameter configured for the second BWP.

In combination with the third possible implementation of the third aspect, in a fourth possible implementation of the third aspect, the determining module is further configured to: transmit, after data transfer of the activated BWP of the first carrier is completed, a switching signaling on a second carrier. The second carrier is a carrier set including at least one carrier for data scheduling, and the switching signaling is configured to indicate switch of the activated BWP of the first carrier.

In a fourth aspect, an embodiment of the present disclosure provides user equipment, including: a receiving module, configured to receive target DCI carrying first energy saving information transmitted by a base station in a first time unit, where the first energy saving information is configured to indicate at least one piece of cross-slot scheduling information contained in a first time window, the first time window includes at least one time unit with the first time unit as a start point or with a time unit following the first time unit as a start point, the cross-slot scheduling information includes at least one of first information or second information, the first information is configured to indicate scheduling DCI as cross-slot scheduling or current slot scheduling, and the second information is configured to indicate a minimum value of a cross-slot scheduling parameter or a minimum value of a cross-slot scheduling parameter in a TDRA list; and a processing module, configured to determine the at least one piece of cross-slot scheduling information contained in the first time window according to the target DCI.

In combination with the fourth aspect, in a first possible implementation of the fourth aspect, the processing module is specifically configured to: bear the at least one piece of cross-slot scheduling information on the scheduling DCI; and return to current slot scheduling if the target DCI is DL scheduling DCI and indicates cross-slot scheduling information of UL scheduling DCI, or the target DCI is UL scheduling DCI and indicates cross-slot scheduling information of DL scheduling DCI.

In combination with the fourth aspect, in a second possible implementation of the fourth aspect, the receiving module is further configured to: receive target DCI carrying second energy saving information transmitted by the base station in a second time unit, where the second energy saving information is configured to indicate at least one piece of cross-slot scheduling information contained in a second time window, and the second time window includes at least one time unit with the second time unit as a start point or with a time unit following the second time unit as a start point; and determine the cross-slot scheduling information according to the target DCI received recently if the second time window partially or completely overlaps with the first time window.

In combination with the fourth aspect, in a third possible implementation of the fourth aspect, the receiving module is further configured to: receive the cross-slot scheduling parameter if the scheduling DCI for data transfer of an activated BWP of a first carrier is configured to be cross-slot scheduling, where the cross-slot scheduling parameter is a maximum value between a first time interval and a first parameter. The first time interval is configured to represent a time interval by which the activated BWP of the first carrier is switched from a first BWP to a second BWP, and the first parameter is configured to indicate a cross-slot scheduling parameter configured for the second BWP of the first carrier.

In combination with the third possible implementation of the fourth aspect, in a fourth possible implementation of the fourth aspect, the processing module is further configured to: receive, after data transfer of the activated BWP of the first carrier is completed, a switching signaling on a second carrier, where the second carrier is a carrier set including at least one carrier for data scheduling, and the switching signaling is configured to indicate switch of the activated BWP of the first carrier; and switch the activated BWP of the first carrier from the first BWP to the second BWP according to the switching signaling.

In a fifth aspect, an embodiment of the present disclosure provides a base station indicating energy saving information. The base station includes a processor and a memory, the memory is configured to store a program executable by the processor, and the processor is configured to read the program in the memory and execute: carrying first energy saving information in target DCI of a first time unit, where the first energy saving information is configured to indicate at least one piece of cross-slot scheduling information contained in a first time window, the first time window includes at least one time unit with the first time unit as a start point or with a time unit following the first time unit as a start point, the cross-slot scheduling information includes at least one of first information or second information, the first information is configured to indicate scheduling DCI as cross-slot scheduling or current slot scheduling, and the second information is configured to indicate a minimum value of a cross-slot scheduling parameter or a minimum value of a cross-slot scheduling parameter in a TDRA list; and transmitting the target DCI to user equipment.

In a sixth aspect, an embodiment of the present disclosure provides a use equipment indicating energy saving information. The use equipment includes a processor and a memory, the memory is configured to store a program executable by the processor, and the processor is configured to read the program in the memory and execute: receiving target DCI carrying first energy saving information transmitted by a base station in a first time unit, where the first energy saving information is configured to indicate at least one piece of cross-slot scheduling information contained in a first time window, the first time window includes at least one time unit with the first time unit as a start point or with a time unit following the first time unit as a start point, the cross-slot scheduling information includes at least one of first information or second information, the first information is configured to indicate scheduling DCI as cross-slot scheduling or current slot scheduling, and the second information is configured to indicate a minimum value of a cross-slot scheduling parameter or a minimum value of a cross-slot scheduling parameter in a TDRA list; and determining the at least one piece of cross-slot scheduling information contained in the first time window according to the target DCI.

In a seventh aspect, an embodiment of the present disclosure provides a storage medium. The storage medium stores a computer-executable instruction, and the computer-executable instruction is configured to enable a computer to execute steps included in any implementation in the first aspect and the second aspect.

### Brief Description of the Drawings

In order to explain embodiments of the present disclosure or technical solutions in the prior art more clearly, the accompanying drawings needed to be used in the description of the embodiments will be briefly introduced below. Apparently, the drawings in the following description are only some embodiments of the present disclosure.
Fig. 1 is a schematic structural diagram of a base station in an embodiment of the present disclosure.
Fig. 2 is flowchart of a method for indicating energy saving information at a base station side in an embodiment of the present disclosure.
Fig. 3 is a schematic structural diagram of user equipment in an embodiment of the present disclosure.
Fig. 4 is flowchart of a method for indicating energy saving information at a user equipment side in an embodiment of the present disclosure.
Fig. 5 is a schematic structural diagram of a base station configured to indicate energy saving information in an embodiment of the present disclosure.
Fig. 6 is a schematic structural diagram of user equipment configured to indicate energy saving information in an embodiment of the present disclosure.
Fig. 7 is a schematic structural diagram of a base station indicating energy saving information in an embodiment of the present disclosure.
Fig. 8 is a schematic structural diagram of user equipment indicating energy saving information in an embodiment of the present disclosure.

### Detailed Description of the Embodiments

In order to make the objectives, technical solutions and advantages of the present disclosure clearer, the technical solutions in embodiments of the present disclosure will be clearly and fully described in combination with the accompanying drawings in the embodiments of the present disclosure. Apparently, the described embodiments are merely part of the embodiments of the present disclosure, rather than all the embodiments. Based on the embodiments in the present disclosure, all other embodiments obtained by those of ordinary skill in the art without creative work shall fall within the protection scope of the present disclosure. In the case of no conflict, the embodiments in the present disclosure and features in the embodiments can be combined with each other arbitrarily. Although a logical sequence is shown in the flowcharts, in some cases, the steps shown or described can be performed in a different sequence from the sequence here.

The terms "first" and "second" in the specification and claims of the present disclosure and the above-mentioned drawings are configured to distinguish different objects, rather than to describe a specific sequence. In addition, the term "including" and any variation thereof are intended to cover non-exclusive protection. For example, a process, method, system, product, or device that includes a series of steps or units is not limited to the listed steps or units, but optionally further includes unlisted steps or units, or optionally further includes other steps or units inherent to these processes, methods, products or devices.

In the embodiments of the present disclosure, "at least one" may represent one or at least two, for example, it may be one, two, three or more, which is not limited in the embodiments of the present disclosure.

In addition, the term "and/or" herein is only an association relationship describing associated objects, which means that there may be three relationships, for example, A and/or B may represent three situations that A exists alone, A and B exist at the same time, and B exists alone. In addition, the character "/" herein, unless otherwise specified, generally indicates that the previous and next associated objects are in an "or" relationship.

At present, when a piece of target DCI carrying energy saving information is only configured to indicate one piece of cross-slot scheduling information and the energy saving information is borne on downlink (DL) scheduling DCI and uplink (UL) scheduling DCI, it can only be used separately to indicate cross-slot scheduling information on the DL scheduling DCI and the UL scheduling DCI, which will increase overhead of the DCI and increase power consumption of blind detection of the UE. It can be seen that although an energy saving effect can be achieved, the energy saving effect is not ideal in the prior art.

In view of this, an embodiment of the present disclosure provides a method for indicating energy saving information. According to the method, first energy saving information is carried in target DCI of a first time unit, the first energy saving information is configured to indicate at least one piece of cross-slot scheduling information contained in at least one time unit with the first time unit as a start point or with a time unit following the first time unit as a start point, and the target DCI is transmitted to user equipment, so that one piece of target DCI carrying the energy saving information can indicate a plurality of pieces of cross-slot scheduling information. Therefore, the technical problems that failure of indication or fuzzy indication exists when the one piece of target DCI carrying the energy saving information indicates the plurality of pieces of cross-slot scheduling information, power consumption of the UE is increased due to loss of the target DCI bearing the energy saving information during transmission, and more target DCI carrying the energy saving information is needed so overhead of the target DCI and power consumption of blind detection of the UE are increased, are solved; power consumption of the UE is reduced; and an energy saving effect is improved.

For a better understanding of the above technical solutions, the technical solutions of the present disclosure are described in detail through the drawings of the specification and specific embodiments. It should be understood that the embodiments of the present disclosure and specific features in the embodiments are detailed description of the technical solutions of the present disclosure, rather than limitation to the technical solutions of the present disclosure. The embodiments of the present disclosure and the technical features in the embodiments can be combined with each other in case of no conflict.

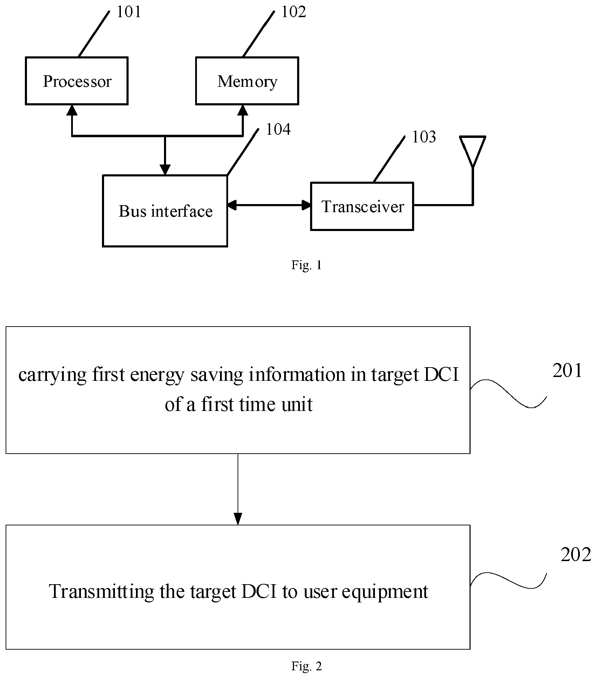

Fig. 1 is a structure of a base station to which the method provided by the embodiments of the present disclosure is applicable. Of course the method provided by the embodiments of the present disclosure may be applicable to various types of base stations. It should be understood that the base station shown in Fig. 1 is detailed description of a base station to which the method provided by the embodiments of the present disclosure is applicable, rather than limitation to base stations to which the method provided by the embodiments of the present disclosure is applicable.

The base station shown in Fig. 1 includes a processor 101, a memory 102, a transceiver 103, and a bus interface 104. The processor 101, the memory 102, and the transceiver 103 are connected through the bus interface 104. The transceiver 101 is configured to transmit target DCI carrying first energy saving information in a first time unit, transmit target DCI carrying second energy saving information in a second time unit and an indication message representing a period of transmitting the target DCI. The memory 102 is configured to store a program instruction. The processor 103 is configured to call the program instruction stored in the memory 102, and execute all steps included in the method for indicating energy saving information according to the obtained program instruction.

Please refer to Fig. 2, an embodiment of the present disclosure provides a method for indicating energy saving information. The method may be executed by the base station shown in Fig. 1. Specific flows of the method are described as follows.

Step 201: carrying first energy saving information in target DCI of a first time unit.

In the embodiments of the present disclosure, the base station configures related information of the first energy saving information. The related information includes a cross-slot scheduling parameter, a minimum value of the cross-slot scheduling parameter, cross-slot scheduling information, and the target DCI bearing the energy saving information. Then the first energy saving information is borne in the target DCI of the first time unit. The first energy saving information is configured to indicate at least one piece of cross-slot scheduling information contained in a first time window, and the first time window includes at least one time unit with the first time unit as a start point or with a time unit following the first time unit as a start point.

The target DCI bearing the energy saving information include at least one of DL scheduling DCI, UL scheduling DCI, group-common DCI, or newly defined DCI configured to bear the energy saving information. In particular, if the first energy saving information is borne on the DL scheduling DCI and/or the UL scheduling DCI, the number of the target DCI is determined to be X; where X is smaller than or equal to the number of the DL scheduling DCI or the UL scheduling DCI contained in one time unit. In order to facilitate understanding, the following description is given in the form of examples.

For example: if the number of the DL scheduling DCI or the UL scheduling DCI contained in the first time unit is 4, the number of the target DCI carrying the first energy saving information is determined to be smaller than or equal to 4.

The cross-slot scheduling information includes at least one of first information or second information. The first information is configured to indicate scheduling DCI as cross-slot scheduling or current slot scheduling, and the second information is configured to indicate a minimum value of a cross-slot scheduling parameter or a minimum value of a cross-slot scheduling parameter in a TDRA list. In the embodiments of the present disclosure, for performing cross-slot scheduling on a specific carrier, in particular, the minimum value of the cross-slot scheduling parameter includes at least one of the following:
a minimum value of a time interval between PDSCH transmission and PDCCH reception;33
a minimum value of a time interval between PDCCH transmission and PDSCH reception;
a minimum value of a time interval between PDCCH transmission and PDSCH transmission;
a minimum value of a time interval between PDCCH reception and PDSCH reception;
a minimum value of a time interval between PUSCH transmission and PDCCH reception;
a minimum value of a time interval between PDCCH transmission and PUSCH reception;
a minimum value of a time interval between PDCCH transmission and PUSCH transmission;
a minimum value of a time interval between PDCCH reception and PUSCH reception;
a minimum value of a time interval between PDCCH transmission and non-periodic CSI-RS reception;
a minimum value of a time interval between non-periodic CSI-RS transmission and PDCCH reception;
a minimum value of a time interval between non-periodic CSI-RS transmission and PDCCH transmission;
a minimum value of a time interval between non-periodic CSI-RS reception and PDCCH reception;
a minimum value of a time interval between PDCCH transmission and SRS reception;
a minimum value of a time interval between SRS transmission and PDCCH reception;
a minimum value of a time interval between SRS transmission and PDCCH transmission;
a minimum value of a time interval between SRS reception and PDCCH reception;
a minimum value of a time interval between PDCCH transmission and CSI-RS reception associated with an SRS request;
a minimum value of a time interval between CSI-RS transmission associated with the SRS request and PDCCH reception;
a minimum value of a time interval between CSI-RS transmission associated with the SRS request and PDCCH transmission; or
a minimum value of a time interval between CSI-RS reception associated with the SRS request and PDCCH reception.

In a specific implementation process, the first energy saving information may directly indicate the scheduling DCI as current slot scheduling or cross-slot scheduling by indicating the first information of the cross-slot scheduling information, or indirectly indicate the scheduling DCI as current slot scheduling or cross-slot scheduling through by indicating the second information of the cross-slot scheduling information. In order to facilitate understanding, the following description is given in the form of examples.

For example, if the first energy saving information indicates that, in the second information, the minimum value of the time interval between PDSCH transmission and PDCCH reception or the minimum value K0 of the time interval between PDCCH transmission and PDSCH reception is equal to A, and the minimum value of the time interval between PUSCH transmission and PDCCH reception or the minimum value K2 of the time interval between PDCCH transmission and PUSCH reception is equal to B, where A and B are both positive integers, the first information is determined to be configured to indicate the scheduling DCI as cross-slot scheduling.

If the first energy saving information indicates that, in the second information, the minimum value of the time interval between PDSCH transmission and PDCCH reception or the minimum value K0 of the time interval between PDCCH transmission and PDSCH reception is equal to A, and the minimum value of the time interval between PUSCH transmission and PDCCH reception or the minimum value K2 of the time interval between PDCCH transmission and PUSCH reception is equal to B, where A is equal to zero and B is not less than zero, the first information is determined to be configured to indicate the scheduling DCI as cross-slot scheduling.

The implementation introduced by the above embodiments is illustrated for a specific carrier. The selection of the carrier is not limited and may be the various situations listed above, and a plurality of carriers may also be scheduled. Base on this, in the embodiments of the present disclosure, if the scheduling DCI for data transfer of an activated BWP of a first carrier is configured to be cross-slot scheduling, where the first carrier is a carrier set including at least one carrier, when the activated BWP of the first carrier is switched, there may be a problem of limited cross-slot scheduling. Based on the problem, in the embodiments of the present disclosure, if the scheduling DCI for data transfer of the activated BWP of the first carrier is configured to be cross-slot scheduling, the cross-slot scheduling parameter is determined to be a maximum value between a first time interval and a first parameter. The first carrier is the carrier set including at least one carrier, the first time interval is configured to indicate a time interval by which the activated BWP of the first carrier is switched from a first BWP to a second BWP, and the first parameter is configured to indicate a cross-slot scheduling parameter configured for the second BWP.

In particular, after data transfer of the activated BWP of the first carrier is completed, a switching signaling is transmitted on a second carrier. The second carrier is a carrier set including at least one carrier for data scheduling, and the switching signaling is configured to indicate switch of the activated BWP of the first carrier. The activated BWP of the first carrier is switched from the first BWP to the second BWP according to the switching signaling.

Step 202: transmitting the target DCI to user equipment.

In the embodiments of the present disclosure, it is judged whether the target DCI is existing DCI in the current standard. If the target DCI is DCI not existing in the current standard (i.e. the newly defined DCI configured to bear the energy saving information described above), a period configured through a static, semi-static, and dynamic signaling is determined to be a period of transmitting the target DCI to the user equipment. If the target DCI is existing DCI in the current standard, the same period of the existing DCI is determined to be the period of transmitting the target DCI to the user equipment. In order to facilitate understanding, the following description is given in the form of examples.

For example, the existing DCI in the current standard includes DCI-format-0-0, DCI-format-0-1, DCI-format-1-0, DCI-format-1-1, DCI-format-2-0, DCI-format-2-1, and DCI-format-2-3 defined in a current standard 38.212 or defined in a current standard 36.212.

If the target DCI is DCI of other formats other than those defined in the current standard 38.212 or the current standard 36.212, the period configured through the static, semi-static, and dynamic signaling is determined to be the period of transmitting the target DCI to the user equipment; where the DCI of other formats, or new DCI may be DCI scrambled with a new radio network temporary identity (RNTI) or DCI defining a new information domain, such as the DL scheduling DCI, the UL scheduling DCI, the group-common DCI, and the newly defined DCI configured to bear the energy saving information.

If the target DCI is the DCI-format-0-0 defined in the current standard 38.212, the same period of the DCI-format-0-0 is determined to be the period of transmitting the target DCI to the user equipment.

The indication message is generated according to the period, and the indication message and the target DCI are transmitted to the user equipment.

In a specific application scenario, the base station may continuously transmit a plurality of pieces of energy saving information to a terminal. If target DCI carrying second energy saving information is transmitted in the time unit following the first time unit, such as a second time unit, and the second energy saving information is configured to indicate at least one piece of cross-slot scheduling information contained in a second time window, the second time window may partially overlap with, not overlap with or completely overlap with the first time window. If the second time window partially overlaps with or completely overlaps with the first time window, there may be a problem that the cross-slot scheduling information indicated by the first energy saving information may be the same as or different from the cross-slot scheduling information indicated by the second energy saving information in the overlapping time window.

Based on the problem, in the embodiments of the present disclosure, the second energy saving information is carried in the target DCI of the second time unit; where the second energy saving information is configured to indicate the at least one piece of cross-slot scheduling information contained in the second time window, the second time window includes at least one time unit with the second time unit as a start point or with a time unit following the second time unit as a start point, and a relation between the second time window and the first time window includes at least one of partial overlap, non-overlap, or complete overlap; and then the target DCI of the second time unit is transmitted to the user equipment.

In the embodiments of the present disclosure, one piece of target DCI carrying the energy saving information can indicate a plurality of pieces of cross-slot scheduling information, so that the technical problems that failure of indication or fuzzy indication exists when the one piece of target DCI carrying the energy saving information indicates the plurality of pieces of cross-slot scheduling information, power consumption of the UE is increased due to loss of the target DCI bearing the energy saving information during transmission, and more target DCI bearing the energy saving information is needed so overhead of the target DCI and power consumption of blind detection of the UE are increased, are solved; power consumption of the UE is reduced; and an energy saving effect is improved.

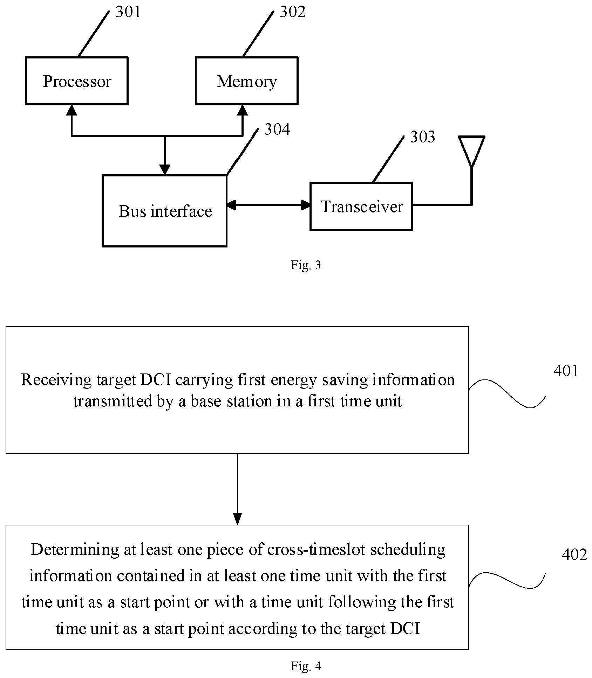

Fig. 3 is a structure of user equipment to which the method provided by the embodiments of the present disclosure is applicable. Of course the method provided by the embodiments of the present disclosure may be applicable to various types of user equipment. It should be understood that the user equipment shown in Fig. 3 is detailed description of user equipment to which the method provided by the embodiments of the present disclosure is applicable, rather than limitation to user equipment to which the method provided by the embodiments of the present disclosure is applicable.

The user equipment shown in Fig. 3 includes a processor 301, a memory 302, a transceiver 303, and a bus interface 304. The processor 301, the memory 302, and the transceiver 303 are connected through the bus interface 304. The transceiver 301 is configured to receive target DCI carrying first energy saving information transmitted by a base station in a first time unit, target DCI carrying second energy saving information transmitted in a second time unit and an indication message representing a period for the base station to transmit the target DCI. The memory 302 is configured to store a program instruction. The processor 303 is configured to call the program instruction stored in the memory 302, and execute all steps included in the method for indicating energy saving information according to the obtained program instruction.

Please refer to Fig. 4, an embodiment of the present disclosure provides a method for indicating energy saving information. The method may be executed by the user equipment shown in Fig. 3. Specific flows of the method are described as follows.

Step 401: receiving target DCI carrying first energy saving information transmitted by a base station in a first time unit.

A format of the target DCI carrying the first energy saving information may be existing DCI in the current standard or DCI not existing in the current standard (i.e. the newly defined DCI configured to bear the energy saving information mentioned above). For different formats of the target DCI, periods of transmitting the target DCI by the base station are different. Base on the problem, in the embodiments of the present disclosure, if the target DCI is DCI not existing in the current standard, a base station side may transmit an indication message configured to indicate a period of transmitting the target DCI. If the target DCI is existing DCI in the current standard, the indication message may not be transmitted in advance.

In the embodiments of the present disclosure, if the base station transmits the indication message in advance, the indication message transmitted by the base station is received. The indication message is configured to represent a period of transmitting the target DCI carrying the first energy saving information in the first time unit by the base station. Then the target DCI carrying the first energy saving information transmitted by the base station is received according to the period.

In particular, the first energy saving information is configured to indicate at least one piece of cross-slot scheduling information contained in a first time window, the first time window includes at least one time unit with the first time unit as a start point or with a time unit following the first time unit as a start point, and the cross-slot scheduling information includes at least one of first information or second information. The first information is configured to indicate scheduling DCI as cross-slot scheduling or current slot scheduling, and the second information is configured to indicate a minimum value of a cross-slot scheduling parameter or a minimum value of a cross-slot scheduling parameter in a TDRA list.

Step 402: determining the at least one piece of cross-slot scheduling information contained in the at least one time unit with the first time unit as a start point or with a time unit following the first time unit as a start point according to the target DCI.

The cross-slot scheduling information is borne on the scheduling DCI. If the first energy saving information is borne on the DL scheduling DCI and the UL scheduling DCI, there will be a problem that the first energy saving information can only be used separately to indicate cross-slot scheduling information on the DL scheduling DCI and the UL scheduling DCI. Base on the problem, in the embodiments of the present disclosure, if the target DCI is the DL scheduling DCI and indicates cross-slot scheduling information of the UL scheduling DCI, or the target DCI is the UL scheduling DCI and indicates cross-slot scheduling information of the DL scheduling DCI, the user equipment returns to current slot scheduling.

Optionally, in a specific application scenario, the base station may continuously transmit a plurality of pieces of energy saving information to a terminal. If target DCI carrying second energy saving information is transmitted in the time unit following the first time unit, such as a second time unit, and the second energy saving information is configured to indicate at least one piece of cross-slot scheduling information contained in a second time window, the second time window may partially overlap with, not overlap with or completely overlap with the first time window. Based on the problem, in the embodiments of the present disclosure, the target DCI carrying the second energy saving information transmitted by the base station in the second time unit is received. The second energy saving information is configured to indicate the at least one piece of cross-slot scheduling information contained in the second time window, and the second time window includes at least one time unit with the second time unit as a start point or with a time unit following the second time unit as a start point.

If the second time window partially overlaps or completely overlaps with the first time window, the user equipment determines the cross-slot scheduling information according to the target DCI received recently.

Optionally, the implementation introduced by the above embodiments is illustrated for a specific carrier. The selection of the carrier is not limited and may be the various situations listed above, and a plurality of carriers may also be scheduled. Base on this, in the embodiments of the present disclosure, if the scheduling DCI for data transfer of an activated BWP of a first carrier is configured to be cross-slot scheduling, where the first carrier is a carrier set including at least one carrier, when the activated BWP of the first carrier is switched, there may be a problem of limited cross-slot scheduling. Based on the problem, in the embodiments of the present disclosure, if the scheduling DCI for data transfer of the activated BWP of the first carrier is configured to be cross-slot scheduling, the user equipment receives a cross-slot scheduling parameter, the cross-slot scheduling parameter is a maximum value between a first time interval and a first parameter; where the first time interval is configured to represent a time interval by which the activated BWP of the first carrier is switched from a first BWP to a second BWP, and the first parameter is configured to indicate a cross-slot scheduling parameter configured for the second BWP of the first carrier. In particular, after data transfer of the activated BWP of the first carrier is completed, a switching signaling is received in a second carrier. The second carrier is a carrier set including at least one carrier for data scheduling, and the switching signaling is configured to indicate switch of the activated BWP of the first carrier. The activated BWP of the first carrier is switched from the first BWP to the second BWP according to the switching signaling.

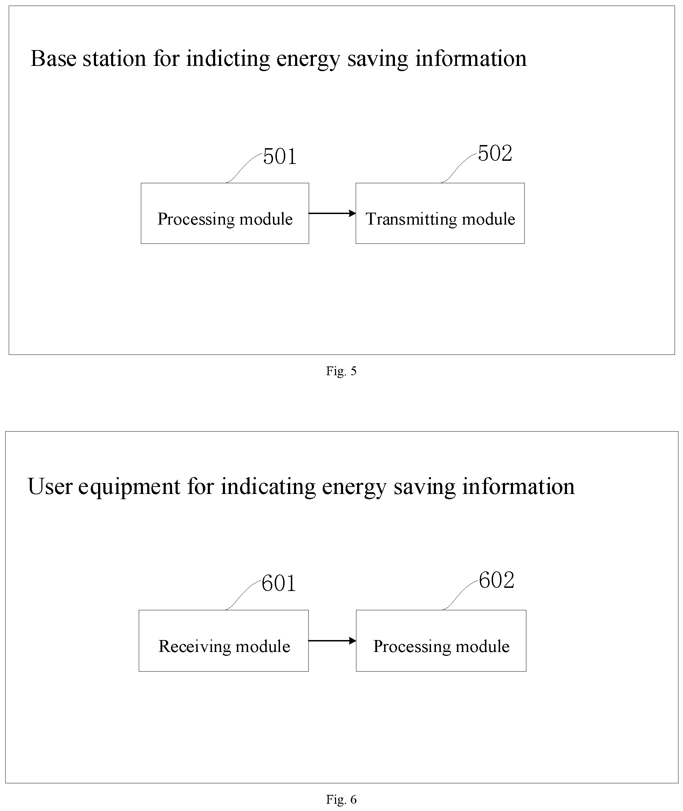

Based on the same inventive concept, an embodiment of the present disclosure provides a base station for indicating energy saving information. The base station can implement the functions corresponding to the aforementioned method for indicating energy saving information. The base station may be a hardware structure, a software module, or a hardware structure plus a software module. The base station may be implemented by a chip system, and the chip system may be composed of chips, or may include chips and other discrete devices. Referring to Fig. 5, the base station includes a processing module 501 and a transmitting module 502.

The processing module 501 is configured to carry first energy saving information in target DCI of a first time unit; where the first energy saving information is configured to indicate at least one piece of cross-slot scheduling information contained in a first time window, the first time window includes at least one time unit with the first time unit as a start point or with a time unit following the first time unit as a start point, the cross-slot scheduling information includes at least one of first information or second information, the first information is configured to indicate scheduling DCI as cross-slot scheduling or current slot scheduling, and the second information is configured to indicate a minimum value of a cross-slot scheduling parameter or a minimum value of a cross-slot scheduling parameter in a TDRA list.

The transmitting module 502 is configured to transmit the target DCI to user equipment.

In an optional implementation, the processing module 501 is further configured to: determine, if the first energy saving information is borne on DL scheduling DCI and/or UL scheduling DCI, the number of the target DCI to be X. X is smaller than or equal to the number of the DL scheduling DCI or the UL scheduling DCI in one time unit.

In an optional implementation, the processing module 501 is further configured to: judge whether the target DCI is existing DCI in the current standard; if the target DCI is DCI not existing in the current standard, determine a period configured through a static, semi-static, and dynamic signaling to be a period of transmitting the target DCI to the user equipment; if the target DCI is existing DCI in the current standard, determine the same period of the existing DCI to be the period of transmitting the target DCI to the user equipment; and generate an indication message according to the period, and transmit the indication message and the target DCI to the user equipment.

In an optional implementation, the transmitting module 502 is further configured to: carry second energy saving information in target DCI in a second time unit; where the second energy saving information is configured to indicate at least one piece of cross-slot scheduling information contained in a second time window, the second time window includes at least one time unit with the second time unit as a start point or with a time unit following the second time unit as a start point, and a relation between the second time window and the first time window includes at least one of partial overlap, non-overlap, or complete overlap; and transmit the target DCI of the second time unit to the user equipment.

In an optional implementation, the base station further includes a determining module, configured to: determine, if the scheduling DCI for data transfer of an activated BWP of a first carrier is configured to be cross-slot scheduling, a cross-slot scheduling parameter to be a maximum value between a first time interval and a first parameter. The first carrier is a carrier set including at least one carrier, the first time interval is configured to represent a time interval by which the activated BWP of the first carrier is switched from a first BWP to a second BWP, and the first parameter is configured to represent a cross-slot scheduling parameter configured for the second BWP.

In an optional implementation, the determining module is further configured to: transmit, after data transfer of the activated BWP of the first carrier is completed, a switching signaling on a second carrier. The second carrier is a carrier set including at least one carrier for data scheduling, and the switching signaling is configured to indicate switch of the activated BWP of the first carrier.

All relevant contents in the steps involved in the aforesaid embodiments of the method for indicting energy saving information may be cited in functional description of functional modules corresponding to the base station in the embodiments of the present disclosure, which will not be repeated here.

The division of modules in the embodiments of the present disclosure is illustrative, and it is only a logical function division. In actual implementation, there may be other division modes. In addition, all the functional modules in the various embodiments of the present disclosure may be integrated in a processor. They may exist alone physically, or two or more modules may be integrated into one module. The above-mentioned integrated modules may be implemented in the form of hardware or software functional modules.

Based on the same inventive concept, embodiments of the present disclosure provide user equipment for indicating energy saving information. The user equipment can implement the functions corresponding to the aforementioned method for indicating energy saving information. The user equipment may be a hardware structure, a software module, or a hardware structure plus a software module. The user equipment may be implemented by a chip system, and the chip system may be composed of chips, or may include chips and other discrete devices. Referring to Fig. 6, the user equipment includes a receiving module 601 and a processing module 602.

The receiving module 601 is configured to receive target DCI carrying first energy saving information transmitted by a base station in a first time unit, where the first energy saving information is configured to indicate at least one piece of cross-slot scheduling information contained in a first time window, the first time window includes at least one time unit with the first time unit as a start point or with a time unit following the first time unit as a start point, the cross-slot scheduling information includes at least one of first information or second information, the first information is configured to indicate scheduling DCI as cross-slot scheduling or current slot scheduling, and the second information is configured to indicate a minimum value of a cross-slot scheduling parameter or a minimum value of a cross-slot scheduling parameter in a TDRA list.

The processing module 602 is configured to determine the at least one piece of cross-slot scheduling information contained in the first time window according to the target DCI.

In an optional implementation, the receiving module 601 is specifically configured to: receive an indication message transmitted by the base station, where the indication message is configured to represent a period of transmitting the target DCI by the base station; and receive the target DCI transmitted by the base station according to the period.

In an optional implementation, the processing module 602 is further configured to: bear the at least one piece of cross-slot scheduling information on the scheduling DCI; and return to current slot scheduling if the target DCI is DL scheduling DCI and indicates cross-slot scheduling information of UL scheduling DCI, or the target DCI is UL scheduling DCI and indicates cross-slot scheduling information of DL scheduling DCI.

In an optional implementation, the receiving module 601 is further configured to: receive target DCI carrying second energy saving information transmitted by the base station in a second time unit; where the second energy saving information is configured to indicate at least one piece of cross-slot scheduling information contained in a second time window, and the second time window includes at least one time unit with the second time unit as a start point or with a time unit following the second time unit as a start point; and determine the cross-slot scheduling information according to the target DCI received recently if the second time window partially or completely overlaps with the first time window.

In an optional implementation, the processing module 602 is further configured to: receive the cross-slot scheduling parameter if the scheduling DCI for data transfer of an activated BWP of a first carrier is configured to be cross-slot scheduling, where the cross-slot scheduling parameter is a maximum value between a first time interval and a first parameter. The first time interval is configured to represent a time interval by which the activated BWP of the first carrier is switched from a first BWP to a second BWP, and the first parameter is configured to represent a cross-slot scheduling parameter configured for the second BWP of the first carrier.

In an optional implementation, the processing module 602 is further configured to: receive, after data transfer of the activated BWP of the first carrier is completed, a switching signaling on a second carrier, where the second carrier is a carrier set including at least one carrier for data scheduling, and the switching signaling is configured to indicate switch of the activated BWP of the first carrier; and switch the activated BWP of the first carrier from the first BWP to the second BWP according to the switching signaling, and determine the first time interval to be the time interval switching from the first BWP to the second BWP.

All relevant contents in the steps involved in the aforesaid embodiments of the method for indicting energy saving information may be cited in functional description of functional modules corresponding to the user equipment in the embodiments of the present disclosure, which will not be repeated here.

The division of modules in the embodiments of the present disclosure is illustrative, and it is only a logical function division. In actual implementation, there may be other division modes. In addition, all the functional modules in the various embodiments of the present disclosure may be integrated in a processor. They may exist alone physically, or two or more modules may be integrated into one module. The above-mentioned integrated modules may be implemented in the form of hardware or software functional modules.

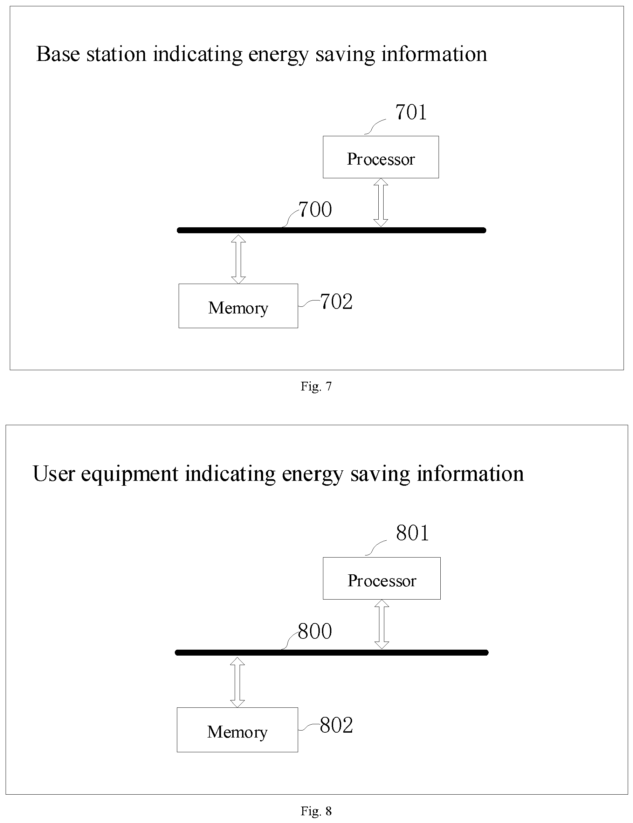

Based on the same inventive concept, embodiments of the present disclosure provide a base station indicating energy saving information. Referring to Fig. 7, the base station includes at least one processor 701 and a memory 702 connected with the at least one processor. A specific connection medium between the processor 701 and the memory 702 is not limited in the embodiment of the present disclosure. Fig. 7 takes a connection between the processor 701 and the memory 702 through a bus 700 as an example, and the bus 700 is represented by a thick line in Fig. 7. Connection modes between other components are only illustratively described, and are not limited thereto. The bus 700 may be divided into an address bus, a data bus, a control bus, etc. For convenience of representation, only a thick line is used in Fig. 7 to represent it, but it does not mean that there is only one bus or one type of bus.

In the embodiment of the present disclosure, the memory 702 stores instructions executable by the at least one processor 701. By calling the instructions stored in the memory 702, the at least one processor 701 may execute steps included in the aforementioned method for indicating the energy saving information. The processor 701 is a control center of the base station, and may use various interfaces and lines to connect various parts of the entire base station, and implement various functions of the base station by executing the instructions stored in the memory 702. Optionally, the processor 701 may include one or more processing units, and the processor 701 may integrate an application processor and a modem processor. The application processor mainly processes an operating system, a user interface, an application program, and so on The modem processor mainly processes wireless communication. It can be understood that the foregoing modem processor may not be integrated into the processor 701 as well. In some embodiments, the processor 701 and the memory 702 may be implemented on the same chip, and in some embodiments, they may also be implemented on separate chips respectively.

As a non-volatile computer-readable storage medium, the memory 702 may be configured to store non-volatile software programs, non-volatile computer-executable programs, and modules. The memory 702 may include at least one type of storage medium, for example, may include a flash memory, a hard disk, a multimedia card, a card-type memory, a random access memory (RAM), a static random access memory (SRAM), a programmable read only memory (PROM), a read only memory (ROM), an electrically erasable programmable read-only memory (EEPROM), a magnetic memory, a magnetic disk, an optical disk, etc. The memory 702 is any other medium that can be configured to carry or store desired program codes in the form of instructions or data structures and that can be accessed by a computer, but is not limited thereto. The memory 702 in the embodiments of the present disclosure may also be a circuit or any other apparatus capable of realizing a storage function for storing program instructions and/or data.

The processor 701 may be a general-purpose processor, such as a central processing unit (CPU), a digital signal processor, an application specific integrated circuit, a field programmable gate array or other programmable logic devices, a discrete gate or transistor logic device, or discrete hardware component, and can implement or execute the methods, steps, and logical block diagrams disclosed in the embodiments of the present disclosure. The general-purpose processor may be a microprocessor or any conventional processor or the like. The steps of the method for indicating the energy saving information disclosed in combination with the embodiments of the present disclosure may be directly embodied as being executed and completed by a hardware processor, or executed and completed by a combination of hardware and software modules in the processor.

By designing and programming the processor 701, a code corresponding to the method for indicating the energy saving information introduced in the foregoing embodiment may be cured into a chip, so that the chip can execute steps of the aforementioned method for indicating the energy saving information during operation. How to design and program the processor 701 are techniques known to those of skill in the art, and will not be repeated here.

Based on the same inventive concept, an embodiment of the present disclosure provides a user equipment indicating energy saving information. Please referring to Fig. 8, the user equipment includes at least one processor 801 and a memory 802 connected with the at least one processor. A specific connection medium between the processor 801 and the memory 802 is not limited in the embodiment of the present disclosure. Fig. 8 takes a connection between the processor 801 and the memory 802 through a bus 800 as an example, and the bus 800 is represented by a thick line in Fig. 8. Connection modes between other components are only illustratively described, and are not limited thereto. The bus 800 may be divided into an address bus, a data bus, a control bus, etc. For convenience of representation, only a thick line is used in Fig. 8 to represent it, but it does not mean that there is only one bus or one type of bus.

In the embodiment of the present disclosure, the memory 802 stores instructions executable by the at least one processor 801. By calling the instructions stored in the memory 802, the at least one processor 801 may execute steps included in the aforementioned method for indicating the energy saving information. The processor 801 is a control center of the user equipment, and may use various interfaces and lines to connect various parts of the entire user equipment, and implement various functions of the user equipment by executing the instructions stored in the memory 802. Optionally, the processor 801 may include one or more processing units, and the processor 801 may integrate an application processor and a modem processor. The application processor mainly processes an operating system, a user interface, an application program and so on. The modem processor mainly processes wireless communication. It can be understood that the foregoing modem processor may not be integrated into the processor 801 as well. In some embodiments, the processor 801 and the memory 802 may be implemented on the same chip, and in some embodiments, they may also be implemented on separate chips respectively.

As a non-volatile computer-readable storage medium, the memory 802 may be configured to store non-volatile software programs, non-volatile computer-executable programs, and modules. The memory 802 may include at least one type of storage medium, for example, may include a flash memory, a hard disk, a multimedia card, a card-type memory, a RAM, an SRAM, a PROM, a ROM, an EEPROM, a magnetic memory, a magnetic disk, an optical disk, etc. The memory 802 is any other medium that can be configured to carry or store desired program codes in the form of instructions or data structures and that can be accessed by a computer, but is not limited thereto. The memory 802 in the embodiment of the present disclosure may also be a circuit or any other apparatus capable of realizing a storage function for storing program instructions and/or data.

The processor 801 may be a general-purpose processor, such as a CPU, a digital signal processor, an application specific integrated circuit, a field programmable gate array or other programmable logic devices, a discrete gate or transistor logic device, or discrete hardware component, and can implement or execute the methods, steps, and logical block diagrams disclosed in the embodiments of the present disclosure. The general-purpose processor may be a microprocessor or any conventional processor or the like. The steps of the method for indicating the energy saving information disclosed in combination with the embodiments of the present disclosure may be directly embodied as being executed and completed by a hardware processor, or executed and completed by a combination of hardware and software modules in the processor.

By designing and programming the processor 801, a code corresponding to the method for indicating the energy saving information introduced in the foregoing embodiments may be cured into a chip, so that the chip can execute steps of the aforementioned method for indicating the energy saving information during operation. How to design and program the processor 801 are techniques known to those of skill in the art, and will not be repeated here.

Based on the same inventive concept, an embodiment of the present disclosure further provides a storage medium. The storage medium stores a computer instruction, and the computer instruction, when run on a computer, enables a computer to execute the steps of the aforesaid methods for indicating the energy saving information.

In some possible implementations, various aspects of the methods for indicating the energy saving information provided by the present disclosure may also be implemented in the form of a program product, which includes a program code. When the program product runs on a base station or user equipment, the program code is configured to enable the base station or the user equipment to execute the steps in the methods for indicating the energy saving information according to various exemplary embodiments of the present disclosure described above in this specification.

Those of skill in the art should understand that the embodiments of the present disclosure can be provided as a method, a system, or a computer program product. Therefore, the present disclosure may adopt the form of a complete hardware embodiment, a complete software embodiment, or an embodiment combining software and hardware. Moreover, the present disclosure may take the form of a computer program product implemented on one or more computer available storage media (including but not limited to a disk storage, CD-ROM, an optical storage, etc.) containing computer available program codes.

The present disclosure is described with reference to flowcharts and/or block diagrams of methods, devices (systems), and computer program products according to the present disclosure. It should be understood that each process and/or block in the flowcharts and/or block diagrams, and the combination of processes and/or blocks in the flowcharts and/or block diagrams can be implemented by computer program instructions. These computer program instructions can be provided to a processor of a general-purpose computer, a special-purpose computer, an embedded processor, or other programmable data processing devices to generate a machine, so that the instructions executed by the processor of the computer or other programmable data processing devices generate an apparatus that implements the functions specified in one or more processes in the flowcharts and/or one or more blocks in the block diagrams.

These computer program instructions can also be stored in a computer-readable memory that can direct the computer or other programmable data processing devices to work in a specific manner, so that the instructions stored in the computer-readable memory produce an article of manufacture including an instruction apparatus that implements the functions specified in one or more processes in the flowcharts and/or one or more blocks in the block diagrams.

These computer program instructions can also be loaded on the computer or other programmable data processing devices, so that a series of operation steps are executed on the computer or other programmable devices to produce computer-implemented processing, so that the instructions executed on the computer or other programmable devices provide steps for realizing the functions specified in one or more processes in the flowcharts and/or one or more blocks in the block diagrams.

Apparently, those of skill in the art can make various changes and modifications to the present disclosure without departing from the spirit and scope of the present disclosure. In this way, if these changes and modifications of the present disclosure fall within the scope of the claims of the present disclosure and their equivalent technologies, the present disclosure also intends to include these changes and modifications.

## Claims

1. A method for indicating energy saving information, applied to a base station, and comprising:
carrying first energy saving information in target downlink control information, DCI, of a first time unit, wherein the first energy saving information is configured to indicate at least one piece of cross-slot scheduling information comprised in a first time window, the first time window comprises at least one time unit with the first time unit as a start point or with a time unit following the first time unit as a start point, and the cross-slot scheduling information comprises at least one of first information or second information, wherein the first information is configured to indicate scheduling DCI as cross-slot scheduling or current slot scheduling, and the second information is configured to indicate a minimum value of a cross-slot scheduling parameter or a minimum value of a cross-slot scheduling parameter in a time domain resource allocation, TDRA, list; and
transmitting the target DCI to user equipment.

2. The method according to claim 1, wherein the minimum value of the cross-slot scheduling parameter comprises at least one of:
a minimum value of a time interval between physical downlink shared channel, PDSCH, transmission and physical downlink control channel, PDCCH, reception;
a minimum value of a time interval between PDCCH transmission and PDSCH reception;
a minimum value of a time interval between PDCCH transmission and PDSCH transmission;
a minimum value of a time interval between PDCCH reception and PDSCH reception;
a minimum value of a time interval between physical uplink shared channel, PUSCH, transmission and PDCCH reception;
a minimum value of a time interval between PDCCH transmission and PUSCH reception;
a minimum value of a time interval between PDCCH transmission and PUSCH transmission;
a minimum value of a time interval between PDCCH reception and PUSCH reception;
a minimum value of a time interval between PDCCH transmission and non-periodic channel state information-reference signal, CSI-RS, reception;
a minimum value of a time interval between non-periodic CSI-RS transmission and PDCCH reception;
a minimum value of a time interval between non-periodic CSI-RS transmission and PDCCH transmission;
a minimum value of a time interval between non-periodic CSI-RS reception and PDCCH reception;
a minimum value of a time interval between PDCCH transmission and sounding reference signal, SRS, reception;
a minimum value of a time interval between SRS transmission and PDCCH reception;
a minimum value of a time interval between SRS transmission and PDCCH transmission;
a minimum value of a time interval between SRS reception and PDCCH reception;
a minimum value of a time interval between PDCCH transmission and CSI-RS reception associated with an SRS request;
a minimum value of a time interval between CSI-RS transmission associated with an SRS request and PDCCH reception;
a minimum value of a time interval between CSI-RS transmission associated with an SRS request and PDCCH transmission; or
a minimum value of a time interval between CSI-RS reception associated with the SRS request and PDCCH reception.

3. The method according to claim 1, wherein the target DCI comprises at least one of downlink, DL, scheduling DCI, uplink, UL, scheduling DCI, group-common DCI, or DCI for bearing the energy saving information.

4. The method according to claim 3, further comprising:
determining a quantity of the target DCI to be X, if the first energy saving information is borne on the DL scheduling DCI and/or the UL scheduling DCI;
wherein X is smaller than or equal to a quantity of the DL scheduling DCI or the UL scheduling DCI comprised in one time unit.

5. The method according to claim 1, further comprising:
carrying second energy saving information in target DCI of a second time unit, wherein the second energy saving information is configured to indicate at least one piece of cross-slot scheduling information comprised in a second time window, the second time window comprises at least one time unit with the second time unit as a start point or with a time unit following the second time unit as a start point, and a relation between the second time window and the first time window comprises at least one of partial overlap, non-overlap, or complete overlap; and
transmitting the target DCI of the second time unit to the user equipment.

6. The method according to claim 2, further comprising:
in a case that the scheduling DCI for data transfer of an activated bandwidth part, BWP, of a first carrier is configured to be cross-slot scheduling, determining the cross-slot scheduling parameter to be a maximum value between a first time interval and a first parameter;
wherein the first carrier is a carrier set comprising at least one carrier, the first time interval is configured to represent a time interval by which the activated BWP of the first carrier is switched from a first BWP to a second BWP, and the first parameter is configured to represent a cross-slot scheduling parameter configured for the second BWP.

7. The method according to claim 6, further comprising:
transmitting a switching signaling on a second carrier after data transfer of the activated BWP of the first carrier is completed;
wherein the second carrier is a carrier set comprising at least one carrier for data scheduling, and the switching signaling is configured to indicate switch of the activated BWP of the first carrier.

8. A method for indicating energy saving information, applied to user equipment, and comprising:
receiving target downlink control information, DCI, carrying first energy saving information transmitted by a base station in a first time unit, wherein the first energy saving information is configured to indicate at least one piece of cross-slot scheduling information comprised in a first time window, the first time window comprises at least one time unit with the first time unit as a start point or with a time unit following the first time unit as a start point, and the cross-slot scheduling information comprises at least one of first information or second information, wherein the first information is configured to indicate scheduling DCI as cross-slot scheduling or current slot scheduling, and the second information is configured to indicate a minimum value of a cross-slot scheduling parameter or a minimum value of a cross-slot scheduling parameter in a time domain resource allocation, TDRA, list; and
determining the at least one piece of cross-slot scheduling information comprised in the first time window according to the target DCI.

9. The method according to claim 8, wherein the determining the at least one piece of cross-slot scheduling information comprised in the first time window according to the target DCI comprises:
bearing the at least one piece of cross-slot scheduling information on the scheduling DCI; and
returning, by the user equipment, to current slot scheduling in a case that the target DCI is downlink, DL, scheduling DCI and indicates cross-slot scheduling information of uplink, UL, scheduling DCI, or the target DCI is UL scheduling DCI and indicates cross-slot scheduling information of DL scheduling DCI.

10. The method according to claim 8, further comprising:
receiving target DCI carrying second energy saving information transmitted by the base station in a second time unit;
wherein the second energy saving information is configured to indicate at least one piece of cross-slot scheduling information comprised in a second time window, and the second time window comprises at least one time unit with the second time unit as a start point or with a time unit following the second time unit as a start point; and
determining, by the user equipment, the cross-slot scheduling information according to the target DCI received recently in a case that the second time window partially or completely overlaps with the first time window.

11. The method according to claim 8, further comprising:
receiving, by the user equipment, the cross-slot scheduling parameter in a case that the scheduling DCI for data transfer of an activated bandwidth part, BWP, of a first carrier is configured to be cross-slot scheduling;
wherein the cross-slot scheduling parameter is a maximum value between a first time interval and a first parameter, the first time interval is configured to represent a time interval by which the activated BWP of the first carrier is switched from a first BWP to a second BWP, and the first parameter is configured to represent a cross-slot scheduling parameter configured for the second BWP of the first carrier.

12. The method according to claim 11, further comprising:
receiving a switching signaling on a second carrier after data transfer of the activated BWP of the first carrier is completed; wherein the second carrier is a carrier set comprising at least one carrier for data scheduling, and the switching signaling is configured to indicate switch of the activated BWP of the first carrier; and
switching the activated BWP of the first carrier from the first BWP to the second BWP according to the switching signaling.

13. Abase station, comprising:
a processing module, configured to carry first energy saving information in target downlink control information, DCI, of a first time unit, wherein the first energy saving information is configured to indicate at least one piece of cross-slot scheduling information comprised in a first time window, the first time window comprises at least one time unit with the first time unit as a start point or with a time unit following the first time unit as a start point, and the cross-slot scheduling information comprises at least one of first information or second information, wherein the first information is configured to indicate scheduling DCI as cross-slot scheduling or current slot scheduling, and the second information is configured to indicate a minimum value of a cross-slot scheduling parameter or a minimum value of a cross-slot scheduling parameter in a time domain resource allocation, TDRA, list; and
a transmitting module, configured to transmit the target DCI to user equipment.

14. User equipment, comprising:
a receiving module, configured to receive target downlink control information, DCI, carrying first energy saving information transmitted by a base station in a first time unit, wherein the first energy saving information is configured to indicate at least one piece of cross-slot scheduling information comprised in a first time window, the first time window comprises at least one time unit with the first time unit as a start point or with a time unit following the first time unit as a start point, and the cross-slot scheduling information comprises at least one of first information or second information, wherein the first information is configured to indicate scheduling DCI as cross-slot scheduling or current slot scheduling, and the second information is configured to indicate a minimum value of a cross-slot scheduling parameter or a minimum value of a cross-slot scheduling parameter in a time domain resource allocation, TDRA, list; and
a processing module, configured to determine the at least one piece of cross-slot scheduling information comprised in the first time window according to the target DCI.

15. Abase station indicating energy saving information, wherein the base station comprises a processor and a memory, the memory is configured to store a program executable by the processor, and the processor is configured to read the program in the memory and execute:
carrying first energy saving information in target downlink control information, DCI, of a first time unit, wherein the first energy saving information is configured to indicate at least one piece of cross-slot scheduling information comprised in a first time window, the first time window comprises at least one time unit with the first time unit as a start point or with a time unit following the first time unit as a start point, and the cross-slot scheduling information comprises at least one of first information or second information, wherein the first information is configured to indicate scheduling DCI as cross-slot scheduling or current slot scheduling, and the second information is configured to indicate a minimum value of a cross-slot scheduling parameter or a minimum value of a cross-slot scheduling parameter in a time domain resource allocation, TDRA, list; and
transmitting the target DCI to user equipment.

16. User equipment indicating energy saving information, wherein the user equipment comprises a processor and a memory, the memory is configured to store a program executable by the processor, and the processor is configured to read the program in the memory and execute:
receiving target downlink control information, DCI, carrying first energy saving information transmitted by a base station in a first time unit, wherein the first energy saving information is configured to indicate at least one piece of cross-slot scheduling information comprised in a first time window, the first time window comprises at least one time unit with the first time unit as a start point or with a time unit following the first time unit as a start point, and the cross-slot scheduling information comprises at least one of first information or second information, wherein the first information is configured to indicate scheduling DCI as cross-slot scheduling or current slot scheduling, and the second information is configured to indicate a minimum value of a cross-slot scheduling parameter or a minimum value of a cross-slot scheduling parameter in a time domain resource allocation, TDRA, list; and
determining the at least one piece of cross-slot scheduling information comprised in the first time window according to the target DCI.

17. A storage medium, wherein the storage medium stores a computer-executable instruction, and the computer-executable instruction is configured to enable a computer to execute the method according to any one of claims 1-12
